# EUROPEAN PATENT APPLICATION

(11) **EP 1 655 849 A2**
(43) Date of publication of application: **10.05.2006**
(21) Application number: 05256829.2
(22) Date of filing: 04.11.2005
(51) Int. Cl.: H04B 1/20

(54) **Remote controller and method of operation of same**

(30) Priority: 08.11.2004 KR 2004090269
(71) Applicant: Samsung Electronics Co., Ltd., Suwon-si, Gyeonggi-Do (KR)
(72) Inventor: Ku, Tae-hyun, Namdong-gu, Incheon (KR)
(74) Representative: Robinson, Ian Michael

(57) **Abstract**

A remote controller (100), and a method of operation of the remote controller (100), the remote controller (100) including a first key (112) to select a predetermined functional mode, and a second key (114) to select a sub mode of the functional mode, wherein an operational mode of the second key (114) is changed to correspond with the selected functional mode in response to the operational mode not corresponding with the selected functional mode.

## Description

The present invention relates to a remote controller and a method of operation of the same.

Recently, as most digital devices are provided in a state in which they are fixed as one device to perform a plurality of independent functions, a remote controller that controls the digital devices is configured to control a plurality of functions.

Also, to avoid the inconvenience that may occur in the situation in which a remote controller is respectively provided for each of a plurality of digital devices, there is provided a universal remote controller so that the one remote controller controls all of the plurality of digital devices.

As described above, with the increase in the trend of providing one remote controller that has various functions to control the plurality of digital devices, a plurality of functional keys are arranged in a limited space of the remote controller. In this case, the order of priority of the functional keys is determined according to relative importance of the functional keys.

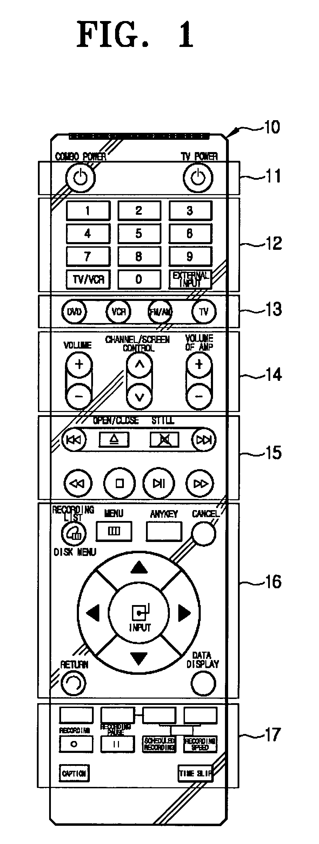

Figure 1 illustrates an appearance of a conventional remote controller.

Referring to Figure 1, a remote controller 10 conventionally includes a power key 11 to turn the power of a corresponding digital device on/off, number keys 12 to directly select and input a channel, device selection keys 13 to select a desired digital device such as a DVD player, VCR, TV, and so on, and channel/volume control keys 14 to control channel selection and volume.

The remote controller 10 further includes playback related function keys 15 to provide playback related functions such as playback, rewind, and fast forward, menu search keys 16 to search and select menus, and other functional keys 17 to provide other functions such as recording and copying.

A channel-up key, a channel-down key, a volume-up key, and a volume-down key are separately required to control channel or volume.

Since it is difficult to provide such various keys in the limited space of the remote controller, one functional key having a toggle function may be provided to implement a plurality of functions. Such a functional key having a toggle function can be configured to implement more functions than the fixed functional keys provided in the remote controller 10.

If the remote controller 10 requires even more increased functions than those provided by the functional key having a toggle function, there is no physical option but to reduce the size of the functional key, or increase the size of the remote controller, to make physical room for more keys.

However, if the size of the functional key is reduced, or the size of the remote controller is increased, it may become inconvenient in practical use. Therefore, it is apparent that there is a practical limitation to increasing the number of functional keys in the remote controller in a physical manner as above.

To solve such a problem, a remote controller that includes a display, a function selection key, and a curser moving key has been disclosed in Korean Patent No. 135,830 in the name of this applicant. The remote controller of Korean Patent No. 135,830 does not require functional keys required to implement various functions. In this remote controller, a menu corresponding to a functional key is displayed in the display without restriction of the space, even if the remote controller requires increased functions.

However, since various functions implemented by the existing functional keys are all displayed in the display, it is necessary to repeatedly manipulate a curser moving key to implement a special function. In this case, it takes time to select a desired function, and inconvenience may occur in practical use.

The present invention is directed to a remote controller, and a method of operation of the same, that addresses one or more problems due to limitations and disadvantages of the related art.

According to the present invention there is provided an apparatus and method as set forth in the appended claims. Preferred features of the invention will be apparent from the dependent claims, and the description which follows.

The present invention provides a remote controller, and a method of operation of the remote controller, in which a structure of the remote controller having various functions is simplified by a direction key and a functional key having a toggle function.

An aspect of the present invention is to provide a remote controller, and a method of operation of the same, in which more functions are implemented by minimum functional keys, such as a functional key implementing a plurality of functions, and a direction key operated in the same operational mode as that of the functional key.

Additional aspects and/or advantages of the invention will be set forth in part in the description which follows and, in part, will be apparent from the description, or may be learned by practice of the invention.

To achieve these and/or other aspects and advantages in accordance with the purpose of the invention, as embodied and broadly described herein, a remote controller according to an embodiment of the present invention includes a key input portion comprising at least one functional key to select a predetermined functional mode, and a direction key to select a sub mode of the functional mode, wherein key input signals corresponding to the functional key and the direction key are generated by selection of the respective keys; a controller to control an operational mode of the direction key to correspond with the selected functional mode in response to the key input signal being supplied from the key input portion to select the functional mode, and to generate a control signal to perform a function corresponding to the sub mode in response to the key input signal being supplied from the key input portion to select the sub mode; and a signal transmitting portion to transmit the generated control signal.

The direction key may implement increase and decrease of sequentially allotted functions corresponding to the functional mode.

The direction key may implement forward and reverse movement of a toggle allotted to the functional key.

The remote controller further may include a display portion to display the selected functional mode and the selected sub mode under control of the controller.

The remote controller may further include a memory to temporarily store the selected functional mode and the selected sub mode.

According to another aspect of the present invention, a method of operation is provided for a remote controller including a functional key to select a predetermined functional mode, and a direction key to select a sub mode of the functional mode, the method comprising: comparing an operational mode of the direction key with the selected functional mode in response to a key input portion being applied to select the functional mode using the functional key; switching the operational mode to correspond with the functional mode in response to the operational mode not corresponding with the functional mode; generating a control signal to perform a function corresponding to a selected sub mode in response to a key input signal being supplied to select the sub mode using the direction key; and transmitting the generated control signal.

The method may further comprise displaying the selected functional mode in response to the key input signal being supplied to select the functional mode.

The method may further comprise storing the selected functional mode in response to the key input signal being supplied to select the functional mode.

The method may further comprise displaying the selected sub mode in response to the key input signal being supplied to select the sub mode.

The method may further comprise storing the selected sub mode in response to the key input signal being supplied to select the sub mode.

According to another aspect of the present invention, there is provided a remote controller comprising: at least one functional key to select a predetermined functional mode; and a direction key to select a sub mode of the functional mode; wherein an operational mode of the direction key is changed to correspond with the selected functional mode in response to the operational mode not corresponding with the selected functional mode.

According to another aspect of the present invention, there is provided a method of operation of a remote controller having at least one functional key to select a predetermined functional mode, and a direction key to select a sub mode of the functional mode, the method comprising: receiving an input from the functional key; receiving an input from the direction key; and switching an operational mode of the direction key to correspond with the functional mode in response to the operational mode not corresponding with the functional mode.

According to another aspect of the present invention, there is provided a remote controller comprising: a first key to select a predetermined functional mode; and a second key to select a sub mode of the functional mode; wherein an operational mode of the second key is changed to correspond with the selected functional mode in response to the operational mode not corresponding with the selected functional mode.

The second key may comprise a direction key having a plurality of directional inputs, wherein the directional inputs may comprise up, down, left, and right, and may be used to incrementally pass through sequentially allotted functions corresponding to the functional mode.

A plurality of functional modes may be allotted to the first key, the functional modes being accessed through a toggle function, and the second key may be used to toggle through the plurality of functional modes allotted to the first key.

These and/or other aspects and advantages of the invention will become apparent and more readily appreciated from the following description of the embodiments, taken in conjunction with the accompanying drawings of which:
Figure 1 illustrates an appearance of a conventional remote controller;
Figure 2 is a block diagram illustrating a remote controller according to an embodiment of the present invention;
Figure 3 illustrates an appearance of the remote controller according to an embodiment of the present invention; and
Figure 4 is a flow chart illustrating a method of controlling the remote controller according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

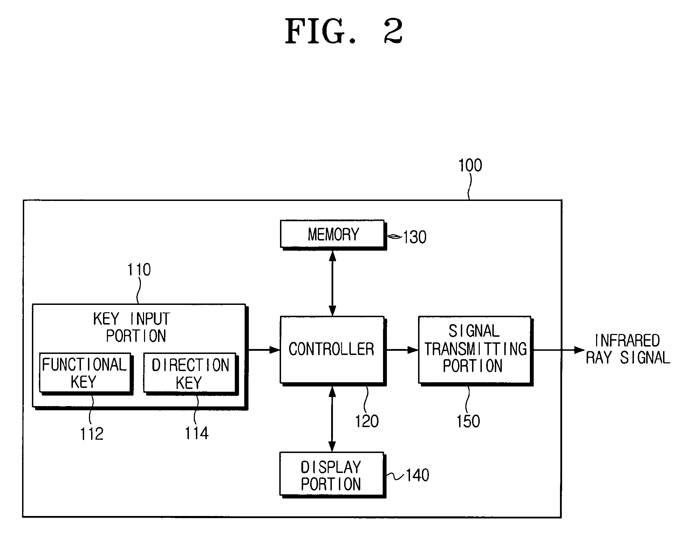

Figure 2 is a block diagram illustrating a remote controller according to an embodiment of the present invention.

A remote controller 100 according to this embodiment of the present invention includes a key input portion 110, a controller 120, a memory 130, a display portion 140, and a signal transmitting portion 150.

The key input portion 110 includes at least one functional key 112 to select a predetermined functional mode, and a direction key 114 of up, down, left, and right to select a sub mode of the functional mode selected by the functional key 112.

For example, sub-functions such as rewind, fast forward, and skip may be sequentially allotted to the sub mode of the functional mode selected by the functional key 112. In other words, the sub mode is selected in the order of rewind, fast forward, and skip whenever the direction key is pushed.

Preferably, though not necessarily, a plurality of functional modes are allotted to one functional key 112, and are accessed through a toggle function. Each of the plurality of functional modes may be allotted with a plurality of corresponding sub modes.

The key input portion 110 includes an essential key in addition to the at least one functional key 112 and the direction key 114. The essential key is used to perform operations such as, for example, turning the power of electronic devices on/off, and implementing a hardware function of a device controlled by the remote controller 100, such as an open and close function of a tray of a DVD or CD player.

Further, the key input portion 110 supplies a key input signal corresponding to the functional key 112 and the direction key 114 to a controller 120, which will be described later in this detailed description.

If the key input signal is supplied from the key input portion 110 to select a functional mode using the functional key 112, the controller 120 compares the selected functional mode with an operational mode of the direction key 114 to determine whether the operational mode of the direction key 114 corresponds with the functional mode of the functional key 112.

Preferably, though not necessarily, the controller 120 maintains the current operational mode of the direction key 114 if the functional mode selected by the functional key 112 corresponds with the operational mode of the direction key 114. If the current operational mode of the direction key 114 does not correspond with the functional mode selected by the functional key 112, the controller 120 switches the operational mode of the direction key 114 so that it does correspond with the functional mode selected by the functional key 112.

Then, if the key input signal is supplied to the controller 120 from the key input portion 110 to select the sub mode using the direction key 114, the controller 120 generates a control signal to perform a function corresponding to the selected sub mode.

The memory 130 stores the selected functional mode provided from the key input portion 110, and the sub mode corresponding to the selected functional mode, and provides the controller 120 with them. The memory 130 also stores the plurality of functions allotted to the functional key 112 by means of the toggle function, and temporarily stores the functional mode selected by the functional key 112, and the sub mode selected by the direction key 114, to provide the controller 120 with them.

The display portion 140 displays the current operational mode of the remote controller 100. Preferably, though not necessarily, the display portion 140 displays the functional mode selected by the functional key 112 and the sub mode selected by the direction key 114 under the control of the controller 120 to allow a user to easily recognize the functional mode and sub mode.

The signal transmitting portion 150 transmits the control signal generated by the controller 120 to an electronic device controlled by the remote controller 100. Generally, the signal transmitting portion 150 generates an infrared ray pulse signal that changes a pulse width depending on a binary code, and outputs the infrared ray pulse signal in the frequency range of approximately 30kHz to 40kHz using an infrared (IR) light-emitting diode (LED).

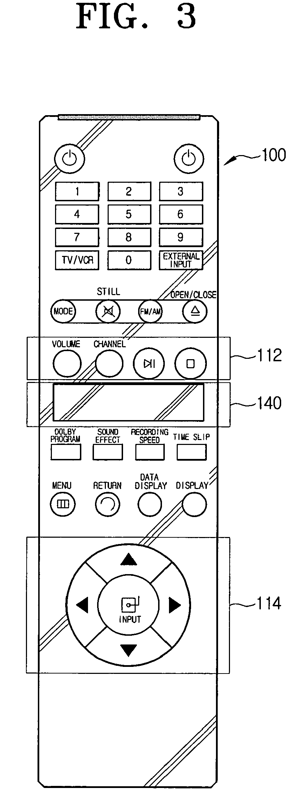

Figure 3 illustrates an appearance of the remote controller according to the an embodiment of the present invention.

The remote controller 100 according to the this embodiment of the present invention is provided with a plurality of keys including the functional keys 112 that implement functions related to volume, channel, and playback, and the direction key 114 in up, down, left, and right directions. This is only one possible embodiment of the remote controller 100, and other embodiments may have different numbers of functional keys 112 and/or direction keys 114.

The remote controller 100 is also provided with a display portion 140 that displays the current operational mode. Although the display portion 140 is arranged at the center portion of the remote controller 100 in this embodiment, it is not limited to this placement, and may be located at a any of a variety of locations on the remote controller 100.

As described above, the remote controller 100 according to an embodiment of the present invention includes the direction key 114 having a relatively large size, which is very frequently used, and the display portion that displays the operational mode. Therefore, it is possible to improve utility of the remote controller.

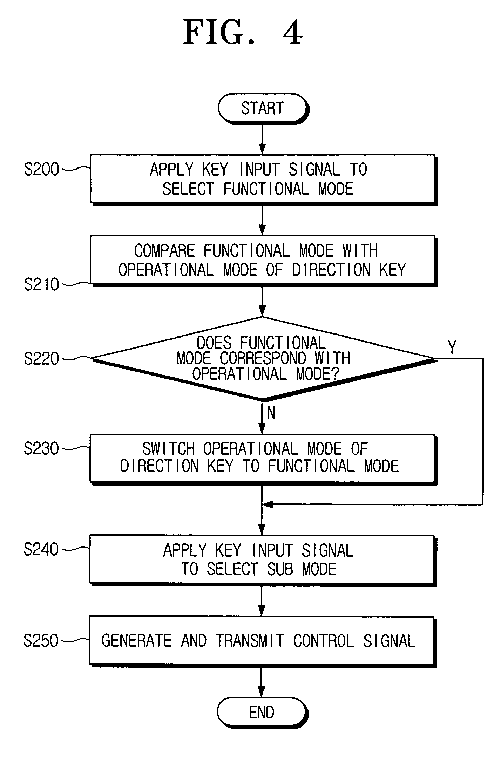

Figure 4 is a flow chart illustrating a method of operation of the remote controller according to an embodiment of the present invention.

The method of operation of the remote controller according to this embodiment of the present invention will be described with reference to Figure 2 through Figure 4.

The user manipulates the remote controller 100 to select a predetermined functional mode. The key input signal is applied from the key input portion 110 to the controller 120 to select the functional mode in operation S200.

If the key input signal is input from the key input portion 110 to the controller 120, the controller 120 compares the functional mode selected by the functional key 112 with the current operational mode of the direction key 114 in operation S210. At this time, the current operational mode of the direction key 114 is the sub mode previously selected by the user.

If the functional mode selected by the functional key 112 does not correspond with the current operational mode of the direction key 114, the controller 120 switches the operational mode of the direction key 114 to correspond to the selected functional mode in operation S230. Conversely, the controller 120 maintains the current operational mode of the direction key 114 if the functional mode selected by the functional key 112 corresponds with the operational mode of the direction key 114 in operation S220.

Afterwards, the user manipulates the direction key 114 of the remote controller 100 to select a predetermined sub mode. Thus, the key input signal is applied from the key input portion 110 to the controller 120 to select the sub mode in operation S240.

Then, if the key input signal is applied from the key input portion 110 to select the sub mode, the controller 120 generates the control signal to perform the function corresponding to the selected sub mode, and transmits the control signal to a corresponding electronic device through the signal transmitting portion 150 in operation S250.

As described above, the remote controller, and the method of operation of the same, according to an embodiment of the present invention have at least the following advantages.

Since the sub mode of the functional key having a plurality of functions is selected using the direction key, more functions can be implemented with minimum functional keys. Therefore, it is possible to easily add additional functions.

In addition, since the sub mode is selected using the direction key having a backward function, it is possible to quickly return to a previous function.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A remote controller (100) comprising:
a key input portion (110) comprising:
at least one functional key (112) to select a predetermined functional mode, and
a direction key (114) to select a sub mode of the functional mode,
wherein key input signals corresponding to the functional key (112) and the direction key (114) are generated by selection of the respective keys;
a controller (120) to control an operational mode of the direction key (114) to correspond with the selected functional mode in response to the key input signal being supplied from the key input portion (110) to select the functional mode, and to generate a control signal to perform a function corresponding to the sub mode in response to the key input signal being supplied from the key input portion (110) to select the sub mode; and
a signal transmitting portion (150) to transmit the generated control signal.

2. The remote controller (100) according to claim 1, wherein the direction key (114) implements increase and decrease of sequentially allotted functions corresponding to the functional mode.

3. The remote controller (100) according to claim 1,
wherein the direction key (114) implements forward and reverse movement of a toggle allotted to the functional key (112).

4. The remote controller (100) according to claim 1, 2 or 3, further comprising a display portion (140) to display the selected functional mode and the selected sub mode under control of the controller (120).

5. The remote controller (100) according to any of claims 1 to 4, further comprising a memory (130) to temporarily store the selected functional mode and the selected sub mode.

6. A method of operation of a remote controller (100) including a functional key (112) to select a predetermined functional mode, and a direction key (114) to select a sub mode of the functional mode, the method comprising:
comparing an operational mode of the direction key (114) with the selected functional mode in response to a key input portion (110) being applied to select the functional mode using the functional key (112);
switching the operational mode to correspond with the functional mode in response to the operational mode not corresponding with the functional mode;
generating a control signal to perform a function corresponding to a selected sub mode in response to a key input signal being supplied to select the sub mode using the direction key (114); and
transmitting the generated control signal.

7. The method according to claim 6, further comprising displaying the selected functional mode in response to the key input signal being supplied to select the functional mode.

8. The method according to claim 6 or 7, further comprising storing the selected functional mode in response to the key input signal being supplied to select the functional mode.

9. The method according to claim 6, 7 or 8, further comprising displaying the selected sub mode in response to the key input signal being supplied to select the sub mode.

10. The method according to claim 6, 7, 8 or 9, further comprising storing the selected sub mode in response to the key input signal being supplied to select the sub mode.

11. A remote controller (100) comprising:
at least one functional key (112) to select a predetermined functional mode; and
a direction key (114) to select a sub mode of the functional mode;
wherein an operational mode of the direction key (114) is changed to correspond with the selected functional mode in response to the operational mode not corresponding with the selected functional mode.

12. The remote controller (100) of claim 11, further comprising a controller (120) to change the operational mode of the direction key (114).

13. The remote controller (100) of claim 12, wherein the controller (120) changes the operational mode of the direction key (114) in response to receiving a key input signal from the functional key (112) and determining that the operational mode of the direction key (114) does not correspond with the selected functional mode.

14. The remote controller (100) of claim 12, wherein the controller (120) generates a control signal to perform a function corresponding to the sub mode in response to a key input signal being supplied from the direction key (114).

15. The remote controller (100) of claim 14, further comprising a signal transmitting portion (150) to transmit the generated control signal.

16. A method of operation of a remote controller (100) having at least one functional key (112) to select a predetermined functional mode, and a direction key (114) to select a sub mode of the functional mode, the method comprising:
receiving an input from the functional key (112);
receiving an input from the direction key (114); and
switching an operational mode of the direction key (114) to correspond with the functional mode in response to the operational mode not corresponding with the functional mode.

17. The method of claim 16, further comprising comparing the operational mode of the direction key (114) with the selected functional mode in response to receiving the input from the functional key (112).

18. The method of claim 16 or 17, further comprising generating a control signal to perform a function corresponding to the selected sub mode in response to receiving the input from the direction key (114).

19. The method of claim 18, further comprising transmitting the generated control signal.

20. The method of claim 16, 17, 18 or 19, further comprising displaying the selected functional mode in response to receiving the input from the functional key (112).

21. The method of claim 16, further comprising displaying the selected sub mode in response to receiving the input from the direction key (114).

22. A remote controller (100) comprising:
a first key (112) to select a predetermined functional mode; and
a second key (114) to select a sub mode of the functional mode;
wherein an operational mode of the second key (114) is changed to correspond with the selected functional mode in response to the operational mode not corresponding with the selected functional mode.

23. The remote controller (100) of claim 22, further comprising a display portion (140), wherein the selected functional mode and the sub mode are displayed on the display portion (140).

24. The remote controller (100) of claim 22 or 23, wherein the second key (114) comprises a direction key (114) having a plurality of directional inputs.

25. The remote controller (100) of claim 24, wherein the directional inputs comprise up, down, left, and right.

26. The remote controller (100) of claim 24 or 25, wherein the directional inputs are used to incrementally pass through sequentially allotted functions corresponding to the functional mode.

27. The remote controller (100) of any of claims 22 to 26, wherein a plurality of functional modes are allotted to the first key (112), the functional modes being accessed through a toggle function.

28. The remote controller (100) of claim 27, wherein the second key (114) is used to toggle through the plurality of functional modes allotted to the first key (112).

29. The remote controller (100) of claim 27, wherein each of the plurality of functional modes are allotted a plurality of corresponding sub modes.
